# EUROPEAN PATENT SPECIFICATION

(11) **EP 3 078 929 B1**
(45) Date of publication and mention of the grant of the patent: **31.01.2018**
(21) Application number: 15199686.5
(22) Date of filing: 11.12.2015
(51) Int. Cl.: F28D 9/00, F28F 3/04, F28F 21/08, B23K 1/00, B23K 1/008, B23K 35/02, B23K 35/30

(54) **METHOD OF PRODUCING A PLATE HEAT EXCHANGER**
VERFAHREN ZUR HERSTELLUNG EINES PLATTENWÄRMETAUSCHERS
PROCÉDÉ POUR LA PRODUCTION D'UN ÉCHANGEUR DE CHALEUR À PLAQUES

(30) Priority: 07.04.2015 EP 15162693
(43) Date of publication of application: 12.10.2016
(73) Proprietor: Alfa Laval Corporate AB, 221 00 Lund (SE)
(72) Inventor: SJÖDIN, Per, SE-223 61 LUND (SE)
(74) Representative: Alfa Laval Attorneys

(56) References cited:
- EP-A1- 0 990 111
- EP-A1- 1 498 682
- US-A- 6 129 143
- US-A1- 2001 007 720
- US-A1- 2004 069 837
- US-A1- 2006 131 359
- US-A1- 2014 079 881
- US-B1- 6 722 002

## Description

### Technical Field

The invention relates to a method of producing a plate heat exchanger with plates that are made of titanium. The invention also relates to a titanium plate heat exchanger and to a metal coil that is used for producing plates for the titanium plate heat exchanger.

### Background Art

Today plate heat exchangers with permanently joined titanium plates are often manufactured by brazing the plates to each other. This is done by applying a brazing material on the plates and by heating the plates such that the brazing material melts and form joints between the plates. The brazing material includes a so caller filler metal, and it is this metal that forms the joints that joins the titanium plates. As for all brazing techniques of this type, the brazing material includes a melting depressant composition that causes the filler metal to melt at a temperature that is lower than the melting temperature of the titanium plates that are joined to each other.

A number of techniques exist for joining titanium plates into a plate heat exchanger. US7201973 describes one such technique, where the brazing material incudes an amount of 30 to 50 wt % titanium (Ti), 15 to 25 wt % zirconium (Zr), 15 to 25 wt % copper (Cu) and 15 to 25 wt % nickel (Ni). More specifically, the used brazing material includes 40 wt % Ti, 20 wt % Zr, 20 wt % Cu and 20 wt % Ni. The titanium is the filler metal while the other metals act as melting depressant components for the titanium.

The filler metal and the melting depressant components typically have the form of metal powders. To bind the metal powder, the brazing material typically also includes a binder composition that gives the brazing material the form of a paste or a liquid that may be sprayed, painted or in another suitable way applied on the titanium plates. It is important that the brazing material is properly applied on the titanium plates, in the correct amounts and on the correct places.

US 2004 069837 further discloses a method of producing a plate heat exchanger, comprising pressing a pattern in titanium plates, stacking the plates with interposed melting depressing foils there between, and brazing the stack of plates.

Applied the brazing composition is an operation that involves both costs and a risk of introducing errors and faults in the process of manufacturing heat exchangers. Thus, there is a need for improving the process of manufacturing plate heat exchanger, in particular those made of Titanium, which typically rely on very traditional brazing techniques.

### Summary

It is an object of the invention to provide an improved method for manufacturing a plate heat exchanger that is made of titanium plates. In particular, an object is to reduce of even eliminate the need of using a binder composition for applying a brazing composition on titanium heat transfer plates.

Thus, a method for producing a plate heat exchanger is provided. The method comprises: obtaining a titanium plate that has been cladded with a melting depressant foil on at least one side of the plate, and, heat treated after the cladding for improving its ductile properties; pressing a pattern in the titanium plate, such that tops and bottoms are formed in the plate; stacking the titanium plate on a number of similar titanium plates, so as to form a stack of, clad and pressed titanium plates, where contact points are formed between adjacent titanium plates in the stack of titanium plates; heating the stack of titanium plates to a temperature above 850 ºC and below the melting point of titanium, such that the melting depressant foil acts as a melting depressant for the titanium in the titanium plates and cause surface layers of the titanium plates to melt, the melted titanium thereby flowing to the contact points between adjacent titanium plates; and allowing the melted titanium to solidify, such that joints are obtained at the contact points between adjacent titanium plates.

The method is advantageous in that no binder composition must be used for accomplishing the joints, and in that no material, such as a brazing material, must be applied on the plates after they have been pressed.

Other objectives, features, aspects and advantages of the production method will appear from the following detailed description as well as from the drawings. A titanium plate heat exchanger that is manufactured according to the method herein as well as a metal coil that is suitable for use with the method are also described, and provide corresponding advantages.

### Brief Description of the Drawings

Embodiments of the invention will now be described, by way of example, with reference to the accompanying schematic drawings, in which
Fig. 1 is a side view of a titanium plate heat exchanger,
Fig. 2 is a front view of the titanium plate heat exchanger in Fig. 1,
Fig. 3 is a front view of a pressed and cut titanium heat transfer plate that is part of the plate heat exchanger in Fig. 1,
Fig. 4 is a front view of the titanium heat transfer plate of Fig. 3, before it has been pressed and cut,
Fig. 5 illustrates a cross-section of the titanium plate of Fig. 3, clad with a melting depressant foil,
Fig. 6 illustrates how a titanium plate is clad with a melting depressant foil,
Fig. 7 is an enlarged, partial view of two titanium heat transfer plates at a contact point, before they are joined,
Fig. 8 is an enlarged, partial view of the two heat transfer plates in Fig. 7, after they have been joined,
Fig. 9 illustrates a coil that is made of a titanium plate that has been clad with a melting depressant foil, and
Fig. 10 is a flow schedule that illustrates a method of producing a titanium plate heat exchanger like the one in Fig. 1.

### Detailed description

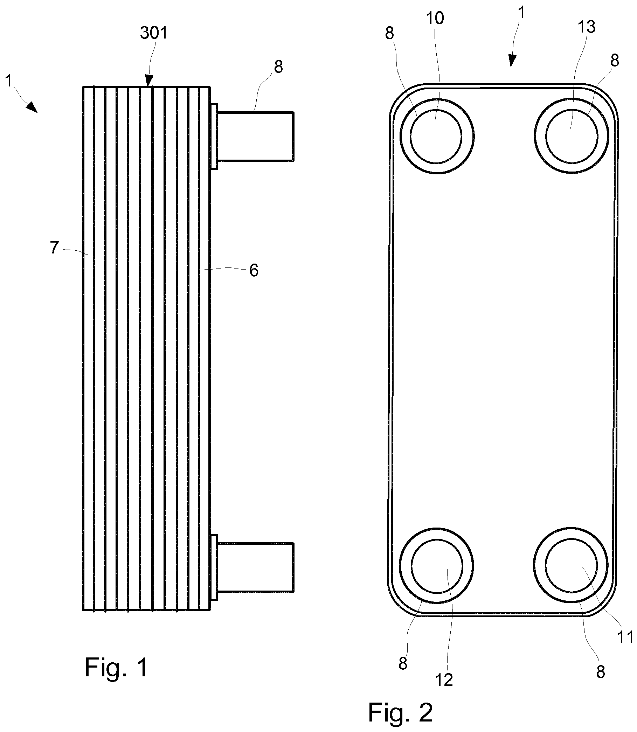

With reference to Figs 1 and 2 a plate heat exchanger 1 that is illustrated. The plate heat exchanger 1 is primarily made of titanium and is thus referred to as a "titanium plate heat exchanger". The plate heat exchanger 1 comprises a stack 301 of heat transfer plates, and a first end plate 6 that is arranged on a first side of the stack 301 and a second end plate 7 that is arranged on a second side of the stack 301. The end plates 6, 7 have the same shape and form as the heat transfer plates in the stack 301, but are slightly thicker for providing protection against external forces.

The stack 301 of heat transfer plates are permanently joined to each other to form the plate stack 301 and has alternating first and second flow paths for a first fluid and a second fluid that flow in between the heat transfer plates. The plate heat exchanger 1 has a first fluid inlet 10 and a first fluid outlet 11. The first fluid inlet 10 receives the first fluid and leads the first fluid to the first flow path between the heat transfer plates. The first fluid outlet 11 receives the first fluid from the first flow passage and allows the fluid to exit the plate heat exchanger 1. The plate heat exchanger 1 has a second fluid inlet 12 and a second fluid outlet 13. The second fluid inlet 12 receives the second fluid and leads the second fluid to the second flow path between the heat transfer plates. The second fluid outlet 13 receives the second fluid from the second flow passage and allows the second fluid to exit the plate heat exchanger 1.

Connectors 8 are arranged around each of the inlets and the outlets, and each connector 8 has the form a pipe. Fluid lines for the two fluids may then be connected to the plate heat exchanger 1 via the connectors 8. Any suitable technique may be used for accomplishing such connection, and the connectors 8 are typically made of the same material as the heat transfer plates in the stack 301. Inlets and outlets for one of the fluids me be reversed, such that there is a co-current flow of the fluids, instead of a counter flow as illustrated.

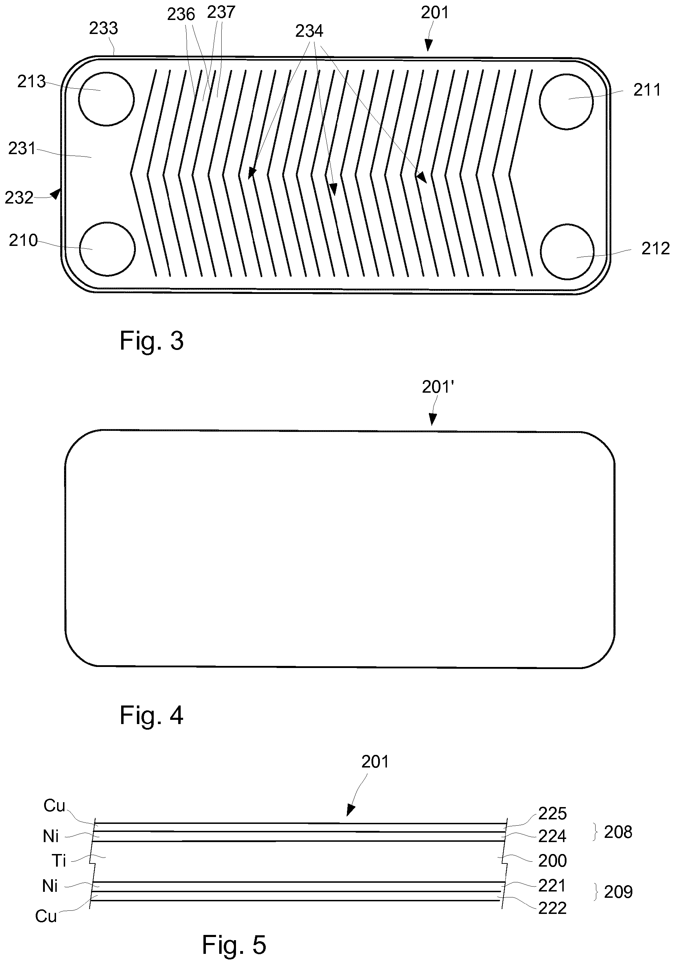

With reference to Fig. 3 a heat transfer plate 201 that is used for the plate heat exchanger 1 is illustrated. All heat transfer plates in the stack 301 may be identical, apart from the end plates 6, 7 which are thicker. The heat transfer plates are arranged on top of each other, with every second heat transfer plate turned 180º around a normal direction of a plane that is parallel to the heat transfer plate. It is also possible to use two different heat transfer plates, where the different heat transfer plates are stacked alternatively on each other. The heat transfer plate 201 has four through holes 210-213, also referred to as port openings, which are aligned with the inlets and outlets 10-13 of the plate heat exchanger 1. A pattern 234 in form of alternating tops 236 and bottoms 237 is pressed into the heat transfer plate 201. The heat transfer plate 201 has a first side 231 and a second side 232. A peripheral edge 233 extends around the heat transfer plate 201 and is folded from the first side 231 towards the second side. The edge 233 abuts an underlying heat transfer plate and seals the peripheries of adjacent plates to each other.

The forms and shapes of the plate heat exchanger 1, the fluid paths for the fluids, the heat transfer plates 201 and the connectors 8 are per se known within the art and can be accomplished according to known techniques. However, the plate heat exchanger 1 is produced in a new manner, by using a plate material with special properties that effectively joins the heat transfer plates in the stack 301. Before the pattern 234 is pressed and the through holes 210-213 and the edge 233 of the heat transfer plate 201 has been formed, the heat transfer plate 201 has the form of a flat heat transfer plate 201' as illustrated by Fig. 4. The heat transfer plate 201 is mainly made of titanium, and is thus referred to as a "titanium plate". Reference numeral 201' indicates the same plate as the plate with reference numeral 201, but before it is pressed and cut.

With reference to Fig. 5 a cross-section of heat transfer plate 201', 201 is illustrated as it appears before it has been joined with adjacent heat transfer plates. The heat transfer plate 201 has a core in form of a titanium plate 200. A first melting depressant foil 208 is arranged on a first side of the titanium plate 200. The first melting depressant foil 208 comprises a nickel (Ni) foil 224 and a copper (Cu) foil 225. Instead of the copper foil 225 a zirconium (Zr) foil may be used. The nickel foil 224 is arranged closest to the titanium plate 200. The titanium plate 200 has a thickness of 0.25 to 1.5 mm and may be made of e.g. titanium type grade 1 or titanium type grade 2. The titanium core 200 is the major part of the heat transfer plate 201', 201.

The copper foil 225 comprises at least 98% pure copper and the nickel foil 224 comprises at least 98 % pure nickel. Remaining percentages of the copper foil 225 and the nickel foil 224 may be other alloy metals or impurities. In case a zirconium foil is used, this foil would comprise at least 98 % pure zirconium.

Each of the copper foil 225 and the nickel foil 224 has a thickness that is less than 4 % of a thickness of the titanium plate 200, or the plate 201, which includes the melting depressant foils. A zirconium foil would also have a thickness that is less than 4 % of a thickness of the titanium plate 200 or the plate 201. Thus, each of the copper foil 225, the nickel foil 224 and, if it is used, the zirconium foil, has a thickness that is less than 4 % of the thickness of the heat transfer plate 201, i.e. the thickness of the titanium plate 200 plus the thickness of all melting depressant foils that are arranged on the titanium plate 200. For example, the titanium plate 200 may have a thickness of 1 mm, the nickel foil 224 may have a thickness of 0,015 mm and the copper foil 225 may have a thickness of 0,015 mm.

Even though it is not necessary, a second melting depressant foil 209 is arranged on a second side of the titanium plate 200. The second melting depressant foil 209 comprises a nickel foil 221 and a copper foil 222. Instead of the copper foil 225 a zirconium foil may be used. The nickel foil 221 is arranged closest to the titanium plate 200. The foils 221, 222 of the second melting depressant foil 209 are identical to the foils of the first melting depressant foil 208. As will be described below, other configurations of melting depressant foils may be used.

With reference to Fig, 6, the heat transfer plate 201', as it appears before it is pressed with a pattern, is obtained by cladding the titanium plate 200 with the first melting depressant foil 208 and the second melting depressant foil 209, on a respective side 231, 232 of the plate 201', i.e. on a respective side of the titanium core 200. The cladding may be accomplished by rolling, for example by conventional cold roll bonding technique. The melting depressant foils 208, 209 are then effectively bonded together with the titanium plate 200. Of course, any other suitable technique may be used for bonding the melting depressant foils to the titanium plate 201'.

During cold roll bonding a high pressure is applied on the layers, i.e. on the copper foils, the nickel foils and the on titanium plate 200. This may in an undesirable manner change the ductile properties of in particular the titanium in the plate 201'. To regain or at least improve the ductile properties the plate 201' it may be heat treated after the cold rolling. This is done at a temperature of about 650 to 850 ºC, for a predetermined time and in accordance with the principles of conventional heat treating of titanium.

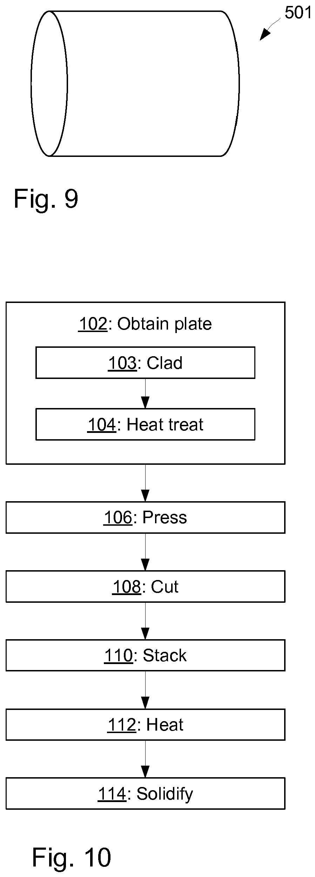

The plate 201' with the titanium core 200 and melting depressant foils 208, 209 may be formed as a continuous strip with a desired width. The strip may be rolled into a coil 501, as illustrated by Fig. 9. The heat treatment may be performed before forming the coil or after the coil has been formed.

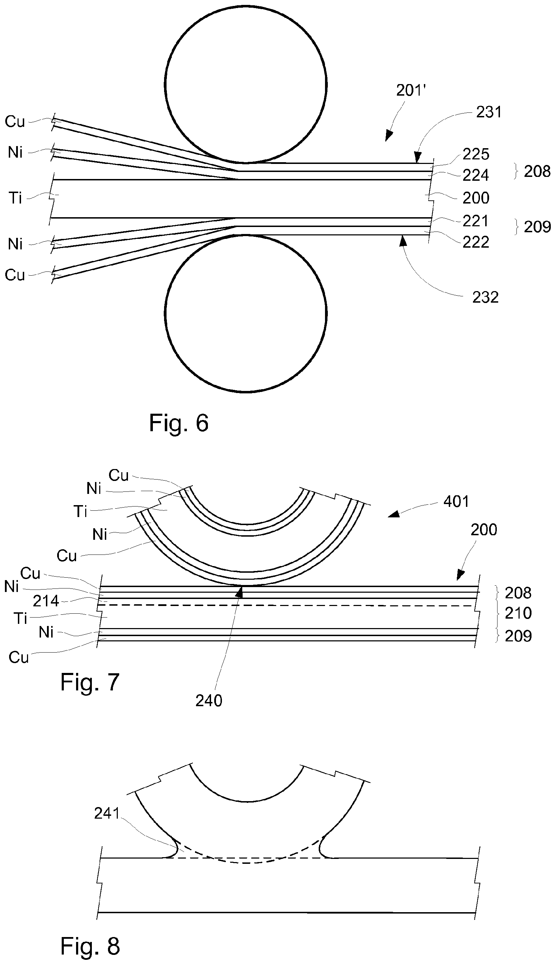

With reference to Figs 7 and 8, when the plate 201 is heated to a temperature just below the melting temperate of titanium, then the melting depressant foils 208, 209 act as melting depressants for the titanium 200 in the plate 201 and cases the surface layers 214 of the plates 201 to melt. The temperature is above 850 ºC and below the melting point of titanium, or below 1050 ºC. All surface layers of all titanium plates 200 that are in contact with the melting depressant foils 208, 209 melt, and how much of the surface layer 214 that melt is determined by the thickness of the copper and nickel foils of the melting depressant foils 208, 209. When two plates 201,401 of titanium with melting depressant foils are arranged in contact with each other, the melted titanium in the melted surface layer 214 flow, by way of capillary forces, towards the contact points 240 between the plates 201, 401. After this the melted titanium is allowed to cool down and thereby solidify, with the result that joints 241 are formed at the contact points 240 between adjacent plates 201, 401, at the point to where the melted titanium flowed. All titanium in the joint then comes from titanium that was part of surface layer 214 of the plate 201. Thus, a self-brazing titanium plate has been accomplished. If titanium is added in some other way, for example by including some in the melting depressant foils, then not all titanium comes from the heat transfer plates in the stack 301. However, typically at least 80% or at least 90% of the titanium in the joints 241 is, before the joining, part of a heat transfer plate 201 in the stack 301 of titanium heat transfer plates.

With reference to Fig. 10, a method of producing a titanium plate heat exchanger like the one in Fig. 1 comprises a number of steps. In a first step a titanium plate 201' is obtained 102. The obtained titanium plate 201' may come e.g. in form of a coil 501, and has been, as described above, clad 103 with the melting depressant foil 208 on at least one side 231 of the plate 201'. Even though it is not necessary, the plate has been heat treated 104 after the cladding 103, as described above.

After that a conventional operation of pressing 106 the pattern 234 in the plate 201' is performed, which forms the tops 236 and bottoms 237 in the plate. The pressing 106 typically comprises pressing the titanium plate 201 with a press depth of at least 1,5 mm, and the tops 236 and bottoms 237 of the pressed plate 201 is thus, on the side of the titanium plate 201 that is clad with the melting depressant foil 208, 209, covered with the melting depressant foil 208. The plate has after this operation become a pressed heat transfer plate 201, and is referred to as a titanium plate, even though it is not only made of titanium (its melting depressant foil is made of another material).

After the step of pressing 106, the plate 201 is cut 108 to a predetermined shape. This includes cutting the plate 201 along its peripheral edge 233 and cutting the through holes 210-213. The cutting operation may in part or in full be performed before pressing 106 the pattern in the plate heat transfer plate 201.

Next a number of similar heat transfer plate 201 is stacked on top of each other, such that the stack 301 of titanium plates 201, 401 is formed. During the stacking the plates come in contact with each other, and contact points 240 are thus formed between adjacent titanium plates 201, 401 in the stack 301.

The operations for pressing 106, cutting 108 and stacking 110 plates are performed according to known techniques. The end plates 6, 7 are similar to the plate 201, with the difference that the titanium core is thicker. The connectors 8 may be omitted depending on the intended use of the plate heat exchanger 1. If the connectors 8 are used they may be made of the same titanium as the plate 201, and may be attached to the stack 301 by using conventional titanium brazing techniques.

Next the stack 301 of titanium plates is heated 112 to a temperature above 850 ºC and below the melting point of titanium. As explained, the melting depressant foil 208 then acts as a melting depressant for the titanium in the titanium plates 201 and cause surface layers 214 of the titanium plates 201 to melt. The melted titanium then flows to the contact points 240 between adjacent titanium plates 201, 401. Thereafter the melted titanium is allowed 114 to solidify (cool) with the result that joints 241 are formed at the contact points 240 between adjacent titanium plates 201, 401. The heat transfer plates in the stack 301 are then effectively joined.

Times and temperatures for performing the step of heating 112 and cooling 114 may depend on the configuration and the thickness the melting depressant foils. For a plate where the titanium core is 0.45 mm thick and where each melting depressant foil comprises a copper foil with a thickness of 3 µm, a nickel foil with a thickness of 6 µm and a copper foil with a thickness of 3 µm, then the heating 112 and cooling 114 may be performed according to the example cycle below. For this example the nickel (Ni) foil is located between two copper (Cu) foils, and both sides of the titanium (Ti) are clad with the melting depressant foil. Thus, the example is a so called Cu-Ni-Cu-Ti-Cu-Ni-Cu plate configuration. A conventional brazing oven was used when performing the cycle.

The cycle included heating the stack 301, which had 20 plates, from 22 Cº to 550 Cº during a period of 30 minutes, holding the temperature at 550 Cº for a period of 20 minutes, flushing the stack with argon gas for 10 minutes at 550 Cº and thereafter evacuating the argon gas to perform the following steps in vacuum. The following steps include increasing the temperature to 900 Cº during a period of 20 minutes, holding the temperature at 900 Cº for 30 minutes, increasing the temperature to 1025 Cº during a period of 5 minutes, holding the temperature at 1025 Cº during a period of 30 minutes, reducing the temperature to 900 Cº for during a period of 30 minutes, and holding the temperature at 900 Cº for 30 minutes. Thereafter the vacuum is released, the oven is shut off and the stack 301 is allowed to cool down inside the oven until it reaches a temperature of 22 Cº (the surrounding temperature).

The obtained stack 301 was perfectly sealed at all contact points between the heat transfer plates in the stack 301.

Other cycles for brazing the stack 301 of titanium plates may be used, and it is estimated that conventional titanium brazing cycles be used.

The described example was performed for a Cu-Ni-Cu-Ti-Cu-Ni-Cu plate configuration. Other configurations may be used, including the following which indicate the order of the foils, where "Cu" represents a copper foil, "Ni" represents a nickel foil, "Zr" represents a zirconium foil and "Ti" represents a titanium plate: Ni-Cu-Ti-Cu-Ni, Cu-Ni-Ti-Ni-Cu, Zr-Ni-Ti-Ni-Zr, Zr-Ni-Cu-Ti-Cu-Ni-Zr, Ni-Ti-Ni, Cu-Ti-Cu, Ni-Ti-Cu, Cu-Ti-Ni. Other combinations are possible, for example may Zr replace Cu for one or more of the embodiments, partly or in full. More layers of Ni, Cu and Zr may also be used, and their order may be changed.

From the description above follows that, although various embodiments of the invention have been described and shown, the invention is not restricted thereto, but may also be embodied in other ways within the scope of the subject-matter defined in the following claims.

## Claims

1. A method of producing a plate heat exchanger (1), comprising
obtaining (102) a titanium plate (201') that has been cladded (103) with a melting depressant foil (208) on at least one side (231) of the plate (201),
pressing (106) a pattern (234) in the titanium plate (201'), such that tops (236) and bottoms (237) are formed in the plate (201),
stacking (110) the titanium plate (201) on a number of similar titanium plates (401), so as to form a stack (301) of, clad, heat treated and pressed, titanium plates (201, 401), where contact points (240) are formed between adjacent titanium plates (201, 401) in the stack (301) of titanium plates (201, 401),
heating (112) the stack (301) of titanium plates (201, 401) to a temperature above 850 ºC and below the melting point of titanium, such that the melting depressant foil (208) acts as a melting depressant for the titanium in the titanium plates (201, 401) and cause surface layers (214) of the titanium plates (201, 401) to melt, the melted titanium thereby flowing to the contact points (240) between adjacent titanium plates (201, 401),
allowing (114) the melted titanium to solidify and form joints (241) at the contact points (240) between adjacent titanium plates (201, 401).

2. A method according to claim 1, wherein the titanium plate has, before pressing (106) a pattern (234) in the titanium plate, a thickness of 0,25 to 1,5 mm.

3. A method according to claim 1 or 2, wherein the melting depressant foil (208) comprises
- a nickel foil (224), and
- any of a copper foil (225) and a zirconium foil (213).

4. A method according to claim 3, wherein the nickel foil (224) has, before pressing (106) a pattern (234) in the titanium plate, a thickness that is less than 4 % of a thickness of the titanium plate (201).

5. A method according to claim 3, wherein the copper foil (225) has, before pressing (106) a pattern (234) in the titanium plate, a thickness that is less than 4 % of a thickness of the titanium plate (201).

6. A method according to claim 3, wherein the zirconium foil (213) has, before pressing (106) a pattern (234) in the titanium plate, a thickness that is less than 4 % of a thickness of the titanium plate (201).

7. A method according to any one of claims 1 - 6, wherein the titanium plate (201) has been cladded (103) with melting depressant foil (208, 209) on each of two sides (231, 232) of the titanium plate (201).

8. A method according to claims 3, wherein the titanium plate (201) has been cladded (103) with the copper foils (225, 222) and the nickel foils (224, 221) by rolling.

9. A method according to any one of claims 1 - 8, wherein the cladded titanium plate (201) has been heat treated (112) at a temperature of 650 to 850 ºC.

10. A method according to any one of claims 1 - 9, wherein the pressing (106) comprises pressing the titanium plate (201) with a press depth of at least 1,5 mm.

11. A method according to any one of claims 1 - 10, wherein the tops (236) and bottoms (237) of the pressed titanium plate (201) is, on the side of the titanium plate (201) that is clad with the melting depressant foil (208, 209), covered with the melting depressant foil (208, 209).

12. A method according to any one of claims 1 - 11, comprising, after the cladding (103) and the heat treating (104), cutting (108) the titanium plate (201) to a predetermined shape.

13. A method according to any one of claims 1 - 12, wherein the heating (112) comprises heating to a heating temperature at 850 to 1050 ºC.

14. A method according to any one of claims 1 - 13, wherein the titanium plate (201) comprises titanium type grade 1 or titanium type grade 2, and the melting depressant foil (208) comprises any of
- a copper foil (225) that comprises at least 98% pure copper,
- a nickel foil (224) that comprises at least 98 % pure nickel, and
- a zirconium foil (213) that comprises at least 98 % pure zirconium.

15. A method according to any one of claims 1 - 14, wherein at least 90% of the titanium in the joints (241) was, before the heating (112), part of any one of the heat transfer plates in the stack (301) of titanium heat transfer plates (201, 401).

## Patentansprüche

1. Verfahren zur Herstellung eines Plattenwärmetauschers (1), folgende Schritte beinhaltend:
Erzielen (102) einer Titanplatte (201'), welche verkleidet wurde (103) mit einer Schmelzpunkterniedriger-Folie (208) auf mindestens einer Seite (231) der Platte (201),
Pressen (106) eines Musters (234) in die Titanplatte (201') in der Weise, dass Ober- (236) und Unterseiten (237) in der Platte (201) gebildet werden,
Stapeln (110) der Titanplatte (201) auf einer Anzahl ähnlicher Titanplatten (401) in der Weise, dass ein Stapel (301) aus verkleideten, wärmebehandelten und gepressten Titanplatten, (201, 401) gebildet wird, wobei Kontaktpunkte (240) zwischen benachbarten Titanplatten (201, 401) im Stapel (301) von Titanplatten (201, 401) gebildet werden,
Erhitzen (112) des Stapels (301) von Titanplatten (201, 401) auf eine Temperatur über 850 °C und unterhalb des Schmelzpunktes von Titan in der Weise, dass die Schmelzpunkterniedriger-Folie (208) als ein Schmelzpunkterniedriger für das Titan in den Titanplatten (201, 401) fungiert und die Oberflächenschichten (214) der Titanplatten (201, 401) zum Schmelzen veranlasst, wodurch das geschmolzene Titan zu den Kontaktpunkten (240) zwischen benachbarten Titanplatten (201, 401) fließt,
Versetzen des geschmolzenen Titans in die Lage (114), zu härten und Verbindungen (241) an den Kontaktpunkten (240) zwischen benachbarten Titanplatten (201, 401) zu bilden.

2. Verfahren nach Anspruch 1, bei welchem die Titanplatte vor dem Pressen (106) eines Musters (234) in die Titanplatte eine Dicke von 0,25 bis 1,5 mm besitzt.

3. Verfahren nach Anspruch 1 oder 2, bei welchem die Schmelzpunkterniedriger-Folie (208) Folgendes beinhaltet:
- eine Nickelfolie (224), und
- ein Element der Gruppe, bestehend aus einer Kupferfolie (225) und einer Zirconiumfolie (213).

4. Verfahren nach Anspruch 3, bei welchem die Nickelfolie (224) vor dem Pressen (106) eines Musters (234) in die Titanplatte eine Dicke besitzt, welche geringer ist als 4 % einer Dicke der Titanplatte (201).

5. Verfahren nach Anspruch 3, bei welchem die Kupferfolie (225) vor dem Pressen (106) eines Musters (234) in die Titanplatte eine Dicke besitzt, welche geringer ist als 4 % einer Dicke der Titanplatte (201).

6. Verfahren nach Anspruch 3, bei welchem die Zirconiumfolie (213) vor dem Pressen (106) eines Musters (234) in die Titanplatte eine Dicke besitzt, welche geringer ist als 4 % einer Dicke der Titanplatte (201).

7. Verfahren nach einem der Ansprüche 1 bis 6, bei welchem die Titanplatte (201) mit Schmelzpunkterniedriger-Folie (208, 209) auf jeder von zwei Seiten (231, 232) der Titanplatte (201) verkleidet (103) worden ist.

8. Verfahren nach Anspruch 3, bei welchem die Titanplatte (201) mit den Kupferfolien (225, 222) und den Nickelfolien (224, 221) durch Rollen verkleidet worden ist (103).

9. Verfahren nach einem der Ansprüche 1 bis 8, bei welchem die verkleidete Titanplatte (201) bei einer Temperatur von 650 bis 850 °C wärmebehandelt (112) worden ist.

10. Verfahren nach einem der Ansprüche 1 bis 9, bei welchem das Pressen (106) Pressen der Titanplatte (201) mit einer Presstiefe von mindestens 1,5 mm beinhaltet.

11. Verfahren nach einem der Ansprüche 1 bis 10, bei welchem die Ober- (236) und Unterseiten (237) der gepressten Titanplatte (201) auf derjenigen Seite der Titanplatte (201), welche mit der Schmelzpunkterniedriger-Folie (208, 209) verkleidet ist, mit der Schmelzpunkterniedriger-Folie (208, 209) bedeckt sind.

12. Verfahren nach einem der Ansprüche 1 bis 11, beinhaltend, nach dem Verkleiden (103) und dem Wärmebehandeln (104), Schneiden (108) der Titanplatte (201) zu einer vorbestimmten Form.

13. Verfahren nach einem der Ansprüche 1 bis 12, bei welchem das Erhitzen (112) Erhitzen auf eine Erhitzungstemperatur von 850 bis 1050 °C beinhaltet.

14. Verfahren nach einem der Ansprüche 1 bis 13, bei welchem die Titanplatte (201) Titan vom Typ Grad 1 oder Grad 2 beinhaltet, und die Schmelzpunkterniedriger-Folie (208) eines der Elemente der nachstehenden Gruppe beinhaltet:
- eine Kupferfolie (225), welche mindestens 98 % reines Kupfer beinhaltet,
- eine Nickelfolie (224), welche mindestens 98 % reines Nickel beinhaltet, und
- eine Zirconiumfolie (213), welche mindestens 98 % reines Zirconium beinhaltet,

15. Verfahren nach einem der Ansprüche 1 bis 14, bei welchem mindestens 90 % des Titans in den Verbindungen (241) vor dem Erhitzen (112) Bestandteil einer der Wärmeübertragungsplatten in dem Stapel (301) der Titan-Wärmeübertragungsplatten (201, 401) war.

## Revendications

1. Procédé de production d'un échangeur de chaleur à plaques (1), comprenant
l'obtention (102) d'une plaque en titane (201') qui a été habillée (103) d'une feuille d'abaissement de la température de fusion (208) sur au moins un côté (231) de la plaque (201),
l'application par pression (106) d'un motif (234) dans la plaque en titane (201'), de telle sorte que des parties supérieures (236) et des parties inférieures (237) sont formées dans la plaque (201),
l'empilement (110) de la plaque en titane (201) sur une pluralité de plaques en titane (401) similaires, de manière à former un empilement (301) de plaques en titane habillées, traitées thermiquement et appliquées par pression (201, 401), où des points de contact (240) sont formés entre des plaques en titane (201, 401) adjacentes dans l'empilement (301) de plaques en titane (201, 401),
le chauffage (112) de l'empilement (301) de plaques en titane (201, 401) jusqu'à une température supérieure à 850°C et inférieure au point de fusion du titane, de telle sorte que la feuille d'abaissement de la température de fusion (208) agit en tant qu'abaisseur de la température de fusion pour le titane dans les plaques en titane (201, 401) et amène les couches de surface (214) des plaques en titane (201, 401) à fondre, le titane fondu s'écoulant ainsi jusqu'aux points de contact (240) entre des plaques en titane (201, 401) adjacentes,
la mise (114) du titane fondu à solidifier et à former des jointures (241) au niveau des points de contact (240) entre des plaques en titane (201, 401) adjacentes.

2. Procédé selon la revendication 1, dans lequel la plaque en titane a, avant d'appliquer par pression (106) un motif (234) dans la plaque en titane, une épaisseur de 0,25 à 1,5 mm.

3. Procédé selon la revendication 1 ou 2, dans lequel la feuille d'abaissement de la température de fusion (208) comprend
- une feuille de nickel (224), et
- l'une quelconque parmi une feuille de cuivre (225) et une feuille de zirconium (213).

4. Procédé selon la revendication 3, dans lequel la feuille de nickel (224) a, avant d'appliquer par pression (106) un motif (234) dans la plaque en titane, une épaisseur qui est inférieure à 4 % d'une épaisseur de la plaque en titane (201).

5. Procédé selon la revendication 3, dans laquelle la feuille de cuivre (225) a, avant d'appliquer par pression (106) un motif (234) dans la plaque en titane, une épaisseur qui est inférieure à 4 % d'une épaisseur de la plaque en titane (201).

6. Procédé selon la revendication 3, dans lequel la feuille de zirconium (213) a, avant d'appliquer par pression (106) un motif (234) dans la plaque en titane, une épaisseur qui est inférieure à 4 % d'une épaisseur de la plaque en titane (201).

7. Procédé selon l'une quelconque des revendications 1-6, dans lequel la plaque en titane (201) a été habillée (103) d'une feuille d'abaissement de la température de fusion (208, 209) sur chacun de deux côtés (231, 232) de la plaque en titane (201).

8. Procédé selon la revendication 3, dans lequel la plaque en titane (201) a été habillée (103) des feuilles de cuivre (225, 222) et des feuilles de nickel (224, 221) par laminage.

9. Procédé selon l'une quelconque des revendications 1-8, dans lequel la plaque en titane (201) habillée a subi un traitement thermique (112) à une température de 650 à 850°C.

10. Procédé selon l'une quelconque des revendications 1-9, dans lequel l'application par pression (106) comprend l'application par pression de la plaque en titane (201) avec une profondeur d'application par pression d'au moins 1,5 mm.

11. Procédé selon l'une quelconque des revendications 1-10, dans lequel les parties supérieures (236) et les parties inférieures (237) de la plaque en titane (201) appliquée par pression sont, sur le côté de la plaque en titane (201) qui est habillée de la feuille d'abaissement de la température de fusion (208, 209), recouvertes de la feuille d'abaissement de la température de fusion (208, 209).

12. Procédé selon l'une quelconque des revendications 1-11, comprenant, après l'habillage (103) et le traitement thermique (104), la découpe (108) de la plaque en titane (201) pour obtenir une forme prédéterminée.

13. Procédé selon l'une quelconque des revendications 1-12, dans lequel le chauffage (112) comprend le chauffage jusqu'à une température de chauffage de l'ordre de 850 à 1050°C.

14. Procédé selon l'une quelconque des revendications 1-13, dans lequel la plaque en titane (201) comprend un de type de titane de grade 1 ou un de type de titane de grade 2, et la feuille d'abaissement de la température de fusion (208) comprend l'une quelconque parmi
- une feuille de cuivre (225) qui comprend au moins 98 % de cuivre pur,
- une feuille de nickel (224) qui comprend au moins 98 % de nickel pur, et
- une feuille de zirconium (213) qui comprend au moins 98 % de zirconium pur.

15. Procédé selon l'une quelconque des revendications 1-14, dans lequel au moins 90 % du titane dans les jointures (241) faisait, avant le chauffage (112), partie de l'une quelconque des plaques de transfert de chaleur dans l'empilement (301) de plaques de transfert de chaleur en titane (201, 401).
